(19) Europäisches Patentamt
European Patent Office
Office européen des brevets

(11) **EP 1 075 078 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
***H02M 5/458*** *(2006.01)*   ***H02P 21/00*** *(2006.01)*

(21) Anmeldenummer: **00114516.8**

(22) Anmeldetag: **06.07.2000**

(54) **Steuerverfahren zum Erzeugen eines Spannungszeigers und eine Steueranordnung für einen Umrichter**

Control method for generation of voltage vector and control system for an inverter

Méthode de contrôle pour la géneration d'un vécteur de tension et système de contrôle pour un invertisseur

(84) Benannte Vertragsstaaten:
**AT BE CH CY DE DK ES FI FR GB GR IE IT LI LU MC NL PT SE**

(30) Priorität: **05.08.1999 DE 19936228**

(43) Veröffentlichungstag der Anmeldung:
**07.02.2001 Patentblatt 2001/06**

(73) Patentinhaber: **Sew-Eurodrive GmbH & Co. KG 76646 Bruchsal (DE)**

(72) Erfinder:
• **Belz, Helmut 68753 Waghäusel (DE)**
• **Hammel, Wolfgang 76646 Bruchsal (DE)**
• **Wolf, Harald 76694 Forst (DE)**

(56) Entgegenhaltungen:
**DE-A- 19 618 723**       **US-A- 5 814 967**

• **PATENT ABSTRACTS OF JAPAN vol. 1997, no. 01, 31. Januar 1997 (1997-01-31) & JP 08 228485 A (FUJI ELECTRIC CO LTD), 3. September 1996 (1996-09-03)**
• **PATENT ABSTRACTS OF JAPAN vol. 010, no. 213 (E-422), 25. Juli 1986 (1986-07-25) & JP 61 052176 A (HITACHI LTD), 14. März 1986 (1986-03-14)**
• **JONSSON R: "DIE NATURLICHE FELDORIENTIERUNG STEUERSYSTEME FUR MODERNE FREQUENZUMRICHTER" ELEKTRONIK, FRANZIS VERLAG GMBH. MUNCHEN, DE, Bd. 44, Nr. 7, 4. April 1995 (1995-04-04), Seiten 94-97, XP000527900 ISSN: 0013-5658**

## Beschreibung

Die Erfindung betrifft ein Steuerverfahren zum Erzeugen eines Spannungszeigers und eine Steueranordnung für einen Umrichter.

Ein solcher Umrichter umfasst eine aus einer Netzspannung versorgbare Gleichrichtereinheit zur Erzeugung der Zwischenkreisspannung, eine Wechselrichtereinheit zur Erzeugung einer einen Asynchronmotor speisenden Ausgangsspannung, eine Steuereinheit zur Ansteuerung des Wechselrichters und eine Vorrichtung zur Erfassung von Spannungsmesswerten der Zwischenkreisspannung.

Aus dem Buch 'Sensorless Vector and Direct Torque Control' aus dem Jahre 1998, ISBN 0-19-856465-1 Seiten 401 bis 407, ist ein spannungs-/frequenzgeführter Umrichter mit einem Steuerverfahren zum Erzeugen eines Spannungszeigers bekannt, bei welchem der Betrag des Spannungszeigers gemäß einer Spannungs-/Frequenz-Kennlinie aus einer Referenz-Frequenz erzeugt wird und der Winkel des Spannungszeigers durch Integration dieser selben Referenz-Frequenz bestimmt wird.

Bei dynamischen Vorgängen, d.h. Änderungen der Referenz-Frequenz, kommt es bei Verwendung eines derartigen Steuerverfahrens zu störenden Einschwingvorgängen. Dabei entstehen hohe Motorströme, die die Leistungselektronik des Umrichters belasten. Außerdem entstehen Drehmomentschwankungen, die sich auf den mechanischen Antriebsstrang übertragen und diesen beanspruchen. Ebenso werden die Einschwingvorgänge stärker je schneller die Änderung der Referenz-Frequenz und je größer die Leistung des verwendeten Motors ist. Im Bereich kleiner Frequenzen sind diese Einschwingvorgänge besonders ausgeprägt. Besonders beim Reversieren, d.h. Umkehren der Drehrichtung, ergeben sich somit äußerst störende Einschwingvorgänge

Beispielsweise bei einer zeitlich linearen Veränderung der Referenz-Frequenz, insbesondere beim Reversieren von einem positiven zu einem negativen Wert, sollte das Drehmoment möglichst konstant sein und somit die Drehzahl des Motors einer ebenfalls zeitlich linearen Funktion entsprechen. Bei Verwendung des beschriebenen Verfahrens bleibt das Drehmoment nicht konstant, also treten Drehmomentspitzen auf, die höher sind als dies bei konstantem Drehmomentverlauf der Fall ist

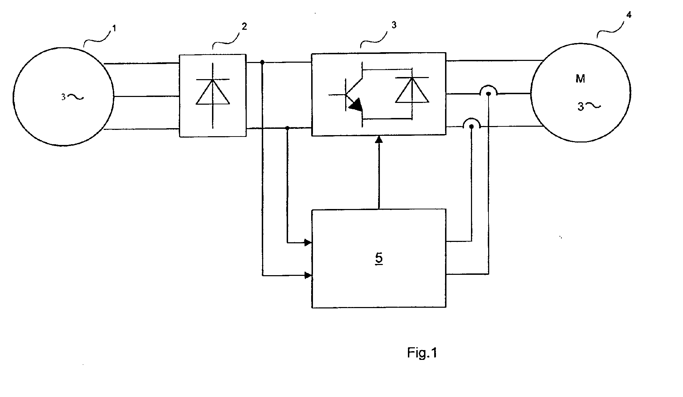

Aus der US 5 814 967 ist bekannt einen korrigierten Winkel ($\gamma'$) zu bestimmen und diesen innerhalb eines spannungs-/frequenzgeführten Umrichter-Regelverfahrens zu verwenden, das in der dortigen Figur 1 dargestellt ist. Dabei nimmt der Korrektur-Winkelanteil z mit zunehmender Frequenz ab, wie aus der dortigen Figur 7 klar ist.

Der Erfindung liegt die Aufgabe zugrunde, ein Steuerverfahren zum Erzeugen eines Spannungszeigers und eine Steueranordnung für einen Umrichter weiterzubilden unter Vermeidung der vorgenannten Nachteile. Insbesondere sollen bei dynamischen Vorgängen keine störenden Einschwingvorgänge auftreten und eine Vorgabe einer zeitlich linearen Veränderung der Referenz-Frequenz soll zu einem möglichst konstanten Drehmoment führen. Darüber hinaus soll die Lösung einfach und kostengünstig sein.

Erfindungsgemäß wird die Aufgabe bei einem Steuerverfahren zum Erzeugen eines Spannungszeigers gelöst nach den in Anspruch 1 angegebenen Merkmalen und bei einer Steueranordnung für einen Umrichter nach den in Anspruch 9 angegebenen Merkmalen.

Ein wichtiges Merkmal bei dem Verfahren zum Erzeugen eines Spannungszeigers ist, dass der Winkel des Spannungszeigers $\alpha_0$ um einen Summanden $\Delta\alpha$ korrigiert wird, wobei dieser Summand zumindest als Funktion, insbesondere nichtlineare Funktion, der Referenz-Frequenz $f$ wählbar ist. Dabei ist dieser Summand vorteilhafterweise derart wählbar und berechenbar dass unerwünschte Einschwingvorgänge bei dynamischen Vorgängen vermeidbar sind. Erfindungsgemäß wird der Winkel des Spannungszeigers $\alpha_0$ um einen Summanden $\Delta\alpha$ korrigiert, wobei dieser Summand $\Delta\alpha$ von der Referenz-Frequenz $f$ derart abhängt, dass er im Wesentlichen mit steigender Referenz-Frequenz $f$ ansteigt Vorteil ist dabei, dass bei dynamischen Vorgängen der Summand den Winkel des Spannungszeigers sehr schnell vorsteuert und somit auf einen Wert bringt, der zum stabilen, eingeschwungenen Zustand des Motors gehört. Ein weiterer Vorteil ist, dass das erfindungsgemäße Steuerverfahren einfach und kostengünstig realisierbar ist und keine zusätzlichen Sensoren verwendet werden müssen.

Bei einer vorteilhaften Ausgestaltung wird das Steuerverfahren mindestens teilweise digital oder diskret realisiert, also mindestens eine Berechnung oder Operation diskret ausgeführt wird. Von Vorteil ist dabei, dass das Steuerverfahren in bestehende Steuereinheiten integriert werden kann.

Bei einer vorteilhaften Ausgestaltung wird der Summand $\Delta\alpha$ gemäß den Motorgleichungen berechnet, wobei für den Wert der q-Komponente des Stromes ein dem Drehmoment oder Schlupf entsprechender Wert verwendbar ist. Von Vorteil ist dabei, dass nur Parameter verwendet werden, die von der Steuereinheit auch zu sonstigen Zwecken verwendet werden.

Bei einer anderen vorteilhaften Ausgestaltung wird der Summand $\Delta\alpha$ gemäß

$$u_d = R_S \cdot i_d - 2 \cdot \pi \cdot f \cdot L_\sigma \cdot i_q \, ,$$

$$u_q = R_S \cdot i_q + 2 \cdot \pi \cdot f \cdot L_S \cdot i_d$$

und $\Delta\alpha = arctan(u_q/u_d)$ bestimmt, wobei für den Wert der q-Komponente des Stromes ein dem Drehmoment oder Schlupf entsprechender Wert verwendbar ist. Von Vorteil ist dabei, dass ein geringer Schaltungs- oder Rechenaufwand notwendig ist.

Bei einer anderen vorteilhaften Ausgestaltung wird der Summand $\Delta\alpha$ gemäß

$$u_d = R_S \cdot i_{d,Nenn} - 2 \cdot \pi \cdot f \cdot L_\sigma \cdot i_q,$$

$$u_q = R_S \cdot i_q + 2 \cdot \pi \cdot f \cdot L_S \cdot i_{d,Nenn}$$

und $\Delta\alpha = arctan(u_q/u_d)$ bestimmt, wobei für den Wert der q-Komponente des Stromes ein dem Drehmoment oder Schlupf entsprechender Wert verwendbar ist. Von Vorteil ist dabei, dass zur Berechnung des Differenzwinkels kein Momentanwert der d-Komponente des Stromes verwendet werden muss, sondern ein konstanter Wert verwendbar ist und somit ein geringer Schaltungs- oder Rechenaufwand notwendig ist.

Bei einer anderen vorteilhaften Ausgestaltung wird der Summand $\Delta\alpha$ gemäß

$$u_d = R_S \cdot i_{d,Nenn},$$

$$u_q = 2 \cdot \pi \cdot f \cdot L_S \cdot i_{d,Nenn}$$

und $\Delta\alpha = arctan(u_q/u_d)$ bestimmt. Von Vorteil ist dabei, dass es sogar ausreicht, den Differenzwinkel lastunabhängig zu berechnen und somit ein geringer Schaltungs- oder Rechenaufwand notwendig ist.

Bei einer vorteilhaften Ausgestaltung ist der Summand $\Delta\alpha$ eine im Wesentlichen antisymmetrische Funktion des Sollwerts der Frequenz des Rotorflusszeigers $f$. Von Vorteil ist dabei, dass Speicherplatz und Rechenzeit einsparbar ist.

Ein wesentliches Merkmal der Erfindung bei der Steueranordnung ist, dass die Steuereinheit derart gestaltet ist, dass das Steuer- oder Regel-Verfahren nach mindestens einem der Ansprüche 1 bis 8 arbeitet. Von Vorteil ist dabei, dass der Umrichter und seine Steuereinheit derart gestaltet und ausgestattet ist, dass unerwünschte Einschwingvorgänge bei dynamischen Vorgängen vermeidbar sind. Ein weiterer Vorteil ist, dass bei dynamischen Vorgängen der Summand den Winkel des Spannungszeigers sehr schnell vorsteuert und somit auf einen Wert bringt, der zum stabilen, eingeschwungenen Zustand des Motors gehört. Ein weiterer Vorteil ist, dass das erfindungsgemäße Steuerverfahren einfach und kostengünstig realisierbar ist und keine zusätzlichen Sensoren verwendet werden müssen. Die Steuereinheit kann dabei das erfindungsgemäße Verfahren in Software oder Hardware, also digital oder auch analog, realisieren

Weitere vorteilhafte Ausgestaltungen ergeben sich aus den Unteransprüchen

**Bezugszeichenliste**

1 Netzspannung
2 Gleichrichter
3 Wechselrichter
4 Elektromotor
5 Steuereinheit
6 Spannungskomponentenbestimmung
7 Transformation von kartesischen Koordinaten in Polarkoordinaten
VD Zeigerdreher

Die Erfindung wird nun anhand von Abbildungen näher erläutert:

Fig. 1 zeigt eine Vorrichtung zur Verwirklichung des erfindungsgemäßen Verfahrens. Darin wird über einen Gleichrichter 2 die Netzspannung 1 zu einer Gleichspannung gleichgerichtet, welche dem Wechselrichter 3 als Zwi-

schenkreisspannung zugeführt wird. Der Drehstrommmotor 4 ist mit den Ausgangsklemmen des Wechselrichters 3 verbunden. Der Wechselrichter 3 wird durch die Steuereinheit 5 angesteuert. Der Steuereinheit 5 wird die gemessene Zwischenkreisspannung zugeführt. Die Steuereinheit 5 ist eine elektronische Steuer- und Regelungsschaltung, die aus Hardware, Software oder einer Kombination von Hardware und Software aufgebaut ist.

Ein wesentliches Merkmal des erfindungsgemäßen, innerhalb der Steuereinheit 5 realisierten Verfahrens ist unter anderem die Berücksichtigung und die Verwendung der Gleichungen, die für den am Asynchronmotor anliegenden Spannungszeiger bei konstantem Drehmoment gelten:

$$u_d = R_S \cdot i_d - 2 \cdot \pi \cdot f \cdot L_\sigma \cdot i_q$$

$$u_q = R_S \cdot i_q + 2 \cdot \pi \cdot f \cdot L_S \cdot i_d ,$$

wobei

$R_S$ der Statorwiderstand,
$L_\sigma$ die Streuinduktivität,
$L_S$ die Statorinduktivität,
$f$ die Frequenz des Flusszeigers gegenüber dem Stator,
$i_d$ die d-Komponente des Statorstromes und
$i_q$ die q-Komponente des Statorstromes ist.

Der am Motor anliegende Spannungszeiger $\underline{U}$ = ($u_d$, $u_q$) ist in feldorientierten Koordinaten dargestellt, wobei die d-Komponente die Projektion des Spannungszeigers auf die Richtung des magnetischen Flusszeigers, also des Rotorflusszeigers, und die q-Richtung die dazu senkrechte Projektion ist. Der Winkel $\alpha$ des Spannungszeigers gegenüber dem Stator ergibt sich daher aus der Summe des Winkels des Rotorflusszeigers gegenüber dem Stator und dem Differenzwinkel $\Delta\alpha = arctan(u_q/u_d)$

Beim Stand der Technik wird der Winkel des Spannungszeigers $\alpha$ nur als zeitliches Integral der Referenz-Frequenz bestimmt. Im stationären Betrieb mit konstanter Frequenz und konstantem Drehmoment stellt sich der Differenzwinkel zwischen Spannungs- und Rotorflusszeiger nach einem abgeklungenen Einschwingvorgang ein. Bei jeder Frequenzänderung stellt sich der neue Differenzwinkel erst nach einem weiteren Einschwingvorgang ein.

Beispielsweise muss bei einer zeitlich linearen Frequenzänderung auch die Frequenz des Rotorflusszeigers eine zeitlich lineare Änderung erfahren, um ein konstantes Drehmoment zu erhalten. Da der Differenzwinkel nichtlinear von der Frequenz abhängt, muss die Frequenz des Spannungszeigers eine nichtlineare Funktion durchlaufen. Wird der Winkel des Spannungszeigers nur durch zeitliches Integrieren aus der Frequenz erzeugt, ist dies nicht der Fall. Somit kann sich während der Frequenzänderung kein konstantes Drehmoment einstellen und es tritt ein störender Einschwingvorgang auf.

Im Gegensatz dazu wird bei der Erfindung der Differenzwinkel $\Delta\alpha = arctan(u_q/u_d)$ gemäß obigen Gleichungen berechnet und vorgesteuert, d.h. zum bloßen Integrationsergebnis addiert. Dies gewährleistet, dass der Winkel des Spannungszeigers gegenüber dem Flusszeiger stets um den erforderlichen Differenzwinkel verdreht ist. Dadurch wird der Einschwingvorgang vermieden. Somit ist es möglich, dass auch bei schnellen linearen Frequenzänderungen der Motor ein konstantes Drehmoment entwickelt.

In einer erfindungsgemäßen Ausführungsform wird bei der Berechnung des Differenzwinkels für die Frequenz $f$ des Rotorflusszeigers die Referenz-Frequenz verwendet. Es sind auch andere Frequenzen, wie beispielsweise die zur Solldrehzahl gehörende Synchronfrequenz, eine Sollfrequenz oder dergleichen, verwendbar.

In einer weiteren Ausführungsform wird für die d-Komponente des Statorstromes $i_d$ ein dem

Nennmagnetisierungsstrom des Motors entsprechender Wert verwendet. Insbesondere im Grunddrehzahlbereich ist dies eine hinreichend gute Näherung.

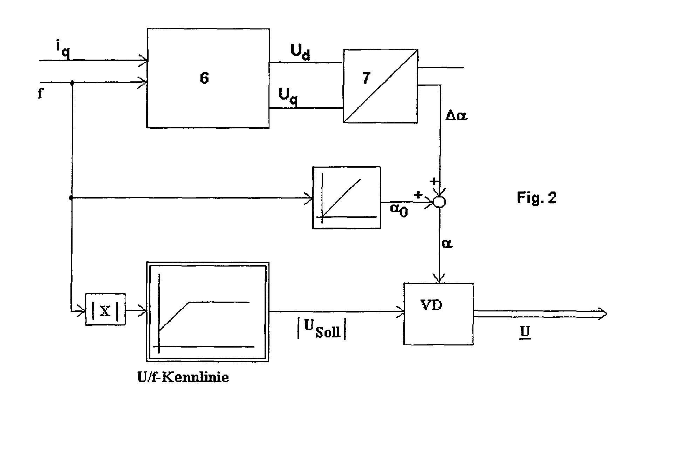

Figur 2 zeigt ein Beispiel einer erfindungsgemäßen Ausführungsform des Verfahrens. Die Referenz-Frequenz $f$ wird einer Betragsbildung unterworfen und aus dem Ergebnis mittels der U/f-Kennlinie ein Sollwert für den Betrag des Spannungszeigers bestimmt, der dann einem Zeigerdreher VD zugeführt wird. Dabei erzeugt der Zeigerdreher VD aus dem Betragswert und einem Winkelwert den Spannungszeiger. Dieser Wert wird dann innerhalb der Steuereinheit 5 in Ansteuersignale für den Wechselrichter 3 umgesetzt.

Der Winkelwert $\alpha$ für den Eingang des Zeigerdrehers VD wird aus einer Summe zweier Winkelwerte, nämlich $\alpha_0$ und dem Differenzwinkel $\Delta\alpha$ bestimmt. Dabei wird $\alpha_0$ mittels einer Integration aus der Referenz-Frequenz $f$ bestimmt. Der vorgesteuerte Differenzwinkel wird als transformierte Polarkoordinate aus den kartesischen Spannungskomponen-

ten gemäß $\Delta\alpha = arctan(u_q/u_d)$ bestimmt. In der Figur 2 ist die Transformation der kartesischen in

Polarkoordinaten im Block 7 enthalten. Dabei werden die Spannungskomponenten aus der Referenz-Frequenz und der q-Komponente des Stromes im Block 6 der Figur 2, also 6 der Spannungskomponentenbestimmung bestimmt. Anstelle der q-Komponente des Stromes kann auch eine dem Drehmoment oder dem Schlupf entsprechende Größe verwendet werden.

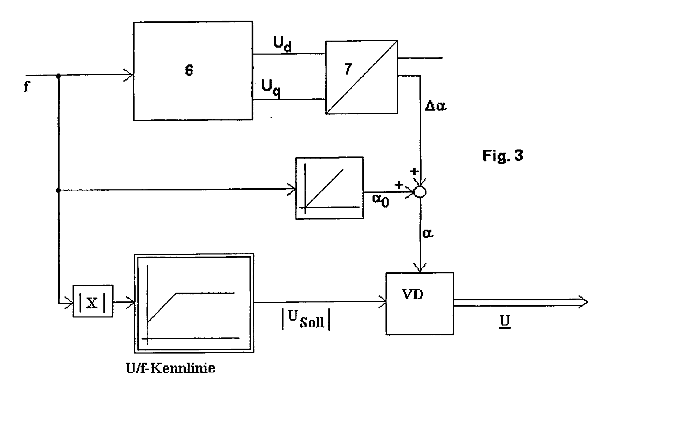

Da der Differenzwinkel im Wesentlichen von der Frequenz f und nur schwach von $i_q$ abhängt, werden, wie in Figur 3 gezeigt, in einer weiteren erfindungsgemäßen Ausführungsform die Spannungskomponenten stets für den drehmomentfreien Zustand, also verschwindende q-Komponente des Stromes, berechnet. In Figur 3 kennzeichnet Block 6 diese Spannungskomponentenbestimmung, wobei sich die in der Figur 2 verwendeten Formeln unterscheiden von den in Figur 2 für Block 6 verwendeten. Bei Figur 3 hängen die Spannungskomponenten nur von der Frequenz und Motorkonstanten oder konstanten Parametern ab.

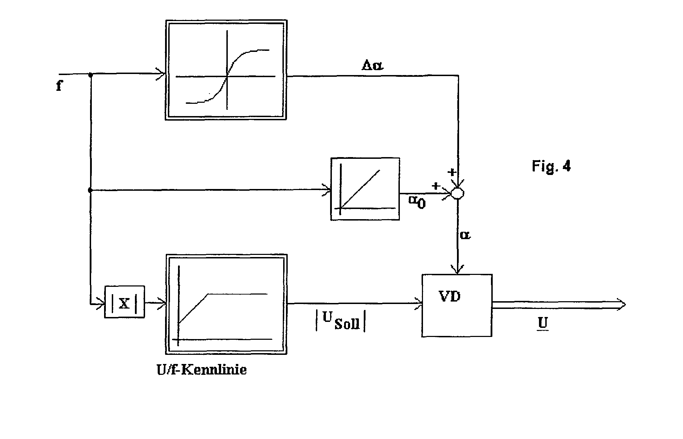

In der Figur 4 sind bei einer weiteren erfindungsgemäßen Ausführungsform die Gleichungen oder Motorgleichungen 6 und die Transformation der kartesischen in Polarkoordinaten 7 in einem Block zusammengefaßt. Dabei hat der Differenzwinkel eine arcustangensförmige Abhängigkeit von der Frequenz $f$ und hängt von im Wesentlichen konstanten Motorparametern ab. Modifikationen der arcustangensförmigen Abhängigkeit sind von der Erfindung ebenfalls umfasst.

In einer weiteren erfindungsgemäßen Ausführungsform wird zum Differenzwinkel ein beliebiger konstanter Wert hinzugefügt. Eine solche Ausführungsform unterscheidet sich also nur durch eine Konstante von den beschriebenen Ausführungsformen.

Erfindungsgemäß kann der Differenzwinkel auch gemäß den folgenden Motorgleichungen bestimmt werden, die bei der Käfig-Läufer-Asynchronmaschine verwendbar sind

$$u_d = R_S \cdot i_d + L_\sigma \cdot \frac{d}{dt} \cdot i_d - 2 \cdot \pi \cdot f \cdot L_\sigma \cdot i_q + \frac{L_H^2}{L_R} \cdot \frac{d}{dt} \cdot i_m$$

$$u_q = R_S \cdot i_q + L_\sigma \cdot \frac{d}{dt} i_q + 2 \cdot \pi \cdot f \cdot L_\sigma \cdot i_d + 2 \cdot \pi \cdot f \cdot \frac{L_H^2}{L_R} \cdot i_m$$

$$\Delta\alpha = arctan\left(u_q / u_d\right).$$

In diesen Gleichungen kann erfindungsgemäß für den Wert der q-Komponente des Stromes ein dem Drehmoment oder Schlupf entsprechender Wert verwendet werden

Bei abgeänderten Ausführungsformen des Motors werden erfindungsgemäß entsprechende Gleichungen verwendet.

Der Einbau des erfindungsgemäßen Verfahrens in andere Verfahren des Standes der Technik, wie stromgeführte Verfahren, feldorientierte Verfahren oder dergleichen, ist von der Erfindung umfasst und ist vom Fachmann leicht durchzuführen.

**Patentansprüche**

1. Steuerverfahren zum Erzeugen eines Spannungszeigers für einen spannungs-/frequenzgeführten Umrichter (2,3,5), wobei zumindest aus einer Referenz-Frequenz $f$ der Betrag des Spannungszeigers gemäß einer Spannungs-/Frequenz-Kennlinie bestimmt wird,
und wobei aus der Referenz-Frequenz $f$ die Winkellage oder der Winkel $\alpha_0$ des Spannungszeigers durch eine zeitliche Integration bestimmt wird,
wobei der Winkel des Spannungszeigers $\alpha_0$ um einen Summanden $\Delta\alpha$ korrigiert wird, wobei dieser Summand als nichtlineare Funktion der Referenz-Frequenz f wählbar ist, **dadurch gekennzeichnet dass** dieser Summand $\Delta\alpha$ von der Referenz-Frequenz $f$ derart abhängt, dass er im Wesentlichen mit steigender Referenz-Frequenz $f$ ansteigt.

2. Steuerverfahren nach Anspruch 1
**dadurch gekennzeichnet, dass**

das Steuerverfahren mindestens teilweise digital oder diskret realisiert wird, also mindestens eine Berechnung oder Operation diskret ausgeführt wird.

3. Steuerverfahren nach Anspruch 1 oder 2
   **dadurch gekennzeichnet, dass**
   der Summand $\Delta\alpha$ gemäß den Motorgleichungen berechnet ist, wobei für den Wert der q-Komponente des Stromes ein dem Drehmoment oder Schlupf entsprechender Wert verwendbar ist

4. Steuerverfahren nach mindestens einem der vorangegangenen Ansprüche
   **dadurch gekennzeichnet, dass**
   der Summand $\Delta\alpha$ gemäß

$$u_d = R_S \cdot i_d - 2 \cdot \pi \cdot f \cdot L_\sigma \cdot i_q ,$$

$$u_q = R_S \cdot i_q + 2 \cdot \pi \cdot f \cdot L_S \cdot i_d$$

und
$\Delta\alpha = arctan(u_q / u_d)$ bestimmt wird, wobei für den Wert der q-Komponente des Stromes ein dem Drehmoment oder Schlupf entsprechender Wert verwendbar ist,
wobei

$R_S$ der Statorwiderstand,
$L_\sigma$ die Streuinduktivität,
$L_S$ die Statorinduktivität,
$f$ die Frequenz des Flusszeigers gegenüber dem Stator,
$i_d$ die d-Komponente des Statorstromes und
$i_q$ die q-Komponente des Statorstromes ist.

5. Steuerverfahren nach einem der Ansprüche 1 bis 3,
   **dadurch gekennzeichnet, dass**
   der Summand $\Delta\alpha$ gemäß

$$u_d = R_S \cdot i_{d.Nenn} - 2 \cdot \pi \cdot f \cdot L_\sigma \cdot i_q ,$$

$$u_q = R_S \cdot i_q + 2 \cdot \pi \cdot f \cdot L_S \cdot i_{d.Nenn}$$

und
$\Delta\alpha = arctan(u_q / u_d)$ bestimmt wird, wobei für den Wert der q-Komponente des Stromes $i_q$ ein dem Drehmoment oder Schlupf entsprechender Wert verwendbar ist,
wobei

$R_S$ der Statdrwiderstand,
$L_\sigma$ die Streuinduktivität,
$L_S$ die Statorinduktivität,
$f$ die Frequenz des Flusszeigers gegenüber dem Stator,
$i_d$ die d-Komponente des Statorstromes und
$i_q$ die q-Komponente des Statorstromes ist.

6. Steuerverfahren nach mindestens einem der Ansprüche 1 bis 3,
   **dadurch gekennzeichnet, dass**
   der Summand $\Delta\alpha$ gemäß

$$u_d = R_S \cdot i_{d,Nenn},$$

$$u_q = 2 \cdot \pi \cdot f \cdot L_S \cdot i_{d,Nenn}$$

und

$$\Delta\alpha = arctan\left(u_q / u_d\right)$$

bestimmt wird,
wobei

$R_S$ der Statorwiderstand,
$L_\sigma$ die Streuinduktivität,
$L_S$ die Statorinduktivität,
$f$ die Frequenz des Flusszeigers gegenüber dem Stator,
$i_d$ die d-Komponente des Statorstromes und
$i_q$ die q-Komponente des Statorstromes ist.

**7.** Steuerverfahren nach mindestens einem der vorangegangenen Ansprüche
**dadurch gekennzeichnet, dass**
der Summand $\Delta\alpha$ im Wesentlichen als Funktion des Referenz-Frequenz $f$ ein Arcustangens ist

**8.** Steuerverfahren nach mindestens einem der vorangegangenen Ansprüche
**dadurch gekennzeichnet, dass**
der Summand $\Delta\alpha$ eine im Wesentlichen antisymmetrische Funktion des Sollwerts der Frequenz des Rotorflusszeigers $f$

**9.** Steueranordnung für einen Umrichter (2,3,5),
umfassend einen Gleichrichter (2), eine Steuereinheit (5) und einen Wechselrichter (3),
wobei die Steuereinheit (5) derart gestaltet ist, dass sie ein mittels Hardware, Software oder einer Kombination von Hardware und Software realisiertes Steuer- oder Regel-Verfahren aufweist, wobei
die Steuereinheit (5)

- Mittel zum Bestimmen des Betrag des Spannungszeigers gemäß einer Spannungs-/Frequenz-Kennlinie zumindest aus einer Referenz-Frequenz $f$,
- Mittel zum Bestimmen der Winkellage oder des Winkels $\alpha_0$ des Spannungszeigers durch eine zeitliche Integration aus der Referenz-Frequenz
- und Mittel zum Korrigieren des Winkels des Spannungszeigers $\alpha_0$ um einen Summanden $\Delta\alpha$ umfasst, wobei dieser Summand $\Delta\alpha$ als nicht lineare Funktion der Referenz-Frequenz $f$ wählbar ist, **dadurch gekennzeichnet dass** diese Mittel derart gestaltet sind, dass der Summand $\Delta\alpha$ von der Referenz-Frequenz $f$ derart abhängt, dass er im Wesentlichen mit steigender Referenz-Frequenz $f$ anstreigt.

**10.** Steueranordnung für einen Umrichter nach Anspruch 9,
**dadurch gekennzeichnet, dass**
die Steuereinheit (5) derart gestaltet ist, dass das Steuer- oder Regel-Verfahren nach mindestens einem der Ansprüche 1 bis 8 arbeitet.

**Claims**

**1.** Control method for generating a voltage vector for a voltage-controlled/frequency-controlled converter (2, 3, 5), the value of the voltage vector being determined from a reference frequency $f$ in accordance with a voltage/frequency characteristic, and the angular position or the angle $\alpha_0$ of the voltage vector being determined from the reference frequency $f$ by time integration, and the angle of the voltage vector $\alpha_0$ being corrected by a summand $\Delta\alpha$, this

summand being selectable as a nonlinear function of the reference frequency *f*, **characterised in that** this summand $\Delta\alpha$ is a function of the reference frequency fin such a way that it substantially increases as the reference frequency *f* increases.

2. Control method according to claim 1, **characterised in that** the control method is carried out, at least in part, digitally or discretely, that is to say at least one calculation or operation is performed discretely.

3. Control method according to either claim 1 or claim 2, **characterised in that** the summand $\Delta\alpha$ is calculated in accordance with the motor equations, a value corresponding to the torque or slip being usable for the value of the q-component of the current.

4. Control method according to at least one of the preceding claims, **characterised in that** the summand $\Delta\alpha$ is determined in accordance with

$$u_d = R_S \cdot i_d - 2 \cdot \pi \cdot f \cdot L_\sigma \cdot i_q,$$

$$u_q = R_S \cdot i_q + 2 \cdot \pi \cdot f \cdot L_S \cdot i_d$$

and
$\Delta\alpha = arctan(u_q/u_d)$, a value corresponding to the torque or the slip being usable for the value of the q-component of the current, in which
$R_S$ is the stator resistance,
$L_\sigma$ is the leakage inductance,
$L_S$ is the stator inductance,
*f* is the frequency of the flux vector in relation to the stator,
$i_d$ is the d-component of the stator current and
$i_q$ is the q-component of the stator current.

5. Control method according to any one of claims 1 to 3, **characterised in that** the summand $\Delta\alpha$ is determined in accordance with

$$u_d = R_S \cdot i_{d,\,rated} - 2 \cdot \pi \cdot f \cdot L_\sigma \cdot i_q,$$

$$u_q = R_S \cdot i_q + 2 \cdot \pi \cdot f \cdot L_S \cdot i_{d,rated}$$

and

$$\Delta\alpha = arctan(u_q/u_d),$$

a value corresponding to the torque or the slip being usable for the value of the q-component of the current $i^q$, in which
$R_S$ is the stator resistance,
$L_\sigma$ is the leakage inductance,
$L_S$ is the stator inductance,
*f* is the frequency of the flux vector in relation to the stator,
$i_d$ is the d-component of the stator current and
$i_q$ is the q-component of the stator current.

6. Control method according to at least one of claims 1 to 3, **characterised in that** the summand $\Delta\alpha$ is determined in accordance with

$$u_d = R_S \cdot i_{d,\,rated}$$

$$u_q = 2 \cdot \pi \cdot f \cdot L_S \cdot i_{d,rated}$$

and

$$\Delta\alpha = arctan(u_q/u_d),$$

in which
$R_S$ is the stator resistance,
$L_\sigma$ is the leakage inductance,
$L_S$ is the stator inductance,
$f$ is the frequency of the flux vector in relation to the stator,
$i_d$ is the d-component of the stator current and
$i_q$ is the q-component of the stator current.

7. Control method according to at least one of the preceding claims, **characterised in that** the summand $\Delta\alpha$ is substantially an arc tangent as a function of the reference frequency $f$.

8. Control method according to at least one of the preceding claims, **characterised in that** the summand $\Delta\alpha$ is a substantially antisymmetric function of the desired value of the frequency of the rotor flux vector $f$.

9. Control arrangement for a converter (2, 3, 5), comprising a rectifier (2), a control unit (5) and an inverter (3), the control unit (5), being configured in such a way that it comprises a control or regulation method carried out by means of hardware, software or a combination of hardware and software, the control unit (5) comprising means for determining the value of the voltage vector in accordance with a voltage/frequency characteristic of at least one reference frequency $f$, means for determining the angular position or the angle $\alpha_0$ of the voltage vector from the reference frequency by means of time integration and means for correcting the angle of the voltage vector $\alpha_0$ by a summand $\Delta\alpha$, this summand $\Delta\alpha$ being selectable as a nonlinear function of the reference frequency $f$, **characterised in that** these means are configured in such a way that the summand $\Delta\alpha$ is a function of the reference frequency $f$ in such a way that said summand substantially increases as the reference frequency $f$ increases.

10. Control arrangement for a converter according to claim 9, **characterised in that** the control unit (5) is configured in such a way that the control or regulation process operates in accordance with at least one of claims 1 to 8.

**Revendications**

1. Procédé de commande pour générer un vecteur de tension pour un convertisseur de fréquence commandé en tension/fréquence (2, 3, 5),
selon lequel la norme du vecteur de tension est déterminée selon une courbe caractéristique tension/fréquence au moins à partir d'une fréquence de référence $f$,
et selon lequel la position angulaire ou l'angle $\alpha_0$ du vecteur de tension est déterminé(e) par une intégration dans le temps,
l'angle du vecteur de tension $\alpha_0$ étant corrigé d'un terme de somme $\Delta\alpha$, ce terme de somme pouvant être choisi comme fonction non linéaire de la fréquence de référence $f$,
**caractérisé en ce que**
ce terme de somme $\Delta\alpha$ dépend de la fréquence de référence $f$ de manière qu'il augmente essentiellement lorsque la fréquence de référence $f$ augmente.

2. Procédé de commande selon la revendication 1,
**caractérisé en ce que**

le procédé de commande est réalisé au moins partiellement de manière numérique ou discrète, donc au moins un calcul ou un opération est effectué(e) de manière discrète.

**3.** Procédé de commande selon la revendication 1 ou 2,
**caractérisé en ce que**
le terme de somme $\Delta\alpha$ est calculé selon les équations du moteur, une valeur correspondant au couple de rotation ou au glissement étant utilisable pour la valeur de la composante q du courant.

**4.** Procédé de commande selon au moins l'une des revendications précédentes,
**caractérisé en ce que**
le terme de somme $\Delta\alpha$ est déterminé selon

$$u_d = R_S \cdot i_d - 2 \cdot \pi \cdot f \cdot L_\sigma \cdot i_q,$$

$$u_q = R_S \cdot i_q + 2 \cdot \pi \cdot f \cdot L_S \cdot i_d$$

et
$\Delta\alpha = arctan(u_q/u_d)$, une valeur correspondant au couple de rotation ou au glissement étant utilisable pour la valeur de la composante q du courant,
**dans lesquelles**

$R_S$ est la résistance de stator,
$L_\sigma$ l'inductance de fuite,
$L_S$ l'inductance de stator,
$f$ la fréquence du vecteur de flux par rapport au stator,
$i_d$ la composante d du courant de stator et
$i_q$ la composante q du courant de stator.

**5.** Procédé de commande selon l'une des revendications 1 à 3,
**caractérisé en ce que**
le terme de somme $\Delta\alpha$ est déterminé selon

$$u_d = R_S \cdot i_{d,nom} - 2 \cdot \pi \cdot f \cdot L_\sigma \cdot i_q,$$

$$u_q = R_S \cdot i_q + 2 \cdot \pi \cdot f \cdot L_S \cdot i_{d,nom}$$

et
$\Delta\alpha = arctan(u_q/u_d)$, une valeur correspondant au couple de rotation ou au glissement étant utilisable pour la valeur de la composante q du courant $i_q$,
**dans lesquelles**

$R_S$ est la résistance de stator,
$L_\sigma$ l'inductance de fuite,
$L_S$ l'inductance de stator,
$f$ la fréquence du vecteur de flux par rapport au stator,
$i_d$ la composante d du courant de stator et
$i_q$ la composante q du courant de stator.

**6.** Procédé de commande selon au moins l'une des revendications 1 à 3,
**caractérisé en ce que**
le terme de somme $\Delta\alpha$ est déterminé selon

$$u_d = R_S \cdot i_{d,nom},$$

$$u_q = 2 \cdot \pi \cdot f \cdot L_S \cdot i_{d,nom}$$

et

$$\Delta\alpha = arctan(u_q/u_d),$$

**dans lesquelles**

$R_S$ est la résistance de stator,
$L_\sigma$ l'inductance de fuite,
$L_S$ l'inductance de stator,
$f$ la fréquence du vecteur de flux par rapport au stator,
$i_d$ la composante d du courant de stator et
$i_q$ la composante q du courant de stator.

7. Procédé de commande selon au moins l'une des revendications précédentes,
   **caractérisé en ce que**
   le terme de somme $\Delta\alpha$ est essentiellement une fonction arctangente de la fréquence de référence $f$.

8. Procédé de commande selon au moins l'une des revendications précédentes,
   **caractérisé en ce que**
   le terme de somme $\Delta\alpha$ est une fonction essentiellement antisymétrique de la valeur de consigne de la fréquence du vecteur de flux rotorique $f$.

9. Dispositif de commande pour un convertisseur de fréquence (2, 3, 5),
   comprenant un redresseur (2), une unité de commande (5) et un onduleur (3),
   l'unité de commande (5) étant conçue de manière qu'elle présente un procédé de commande ou de régulation réalisé au moyen de matériel, de logiciel ou d'une combinaison de matériel et de logiciel,
   l'unité de commande (5) comprenant

   - des moyens pour déterminer la norme du vecteur de tension selon une courbe caractéristique tension/fréquence au moins à partir d'une fréquence de référence $f$,
   - des moyens pour déterminer la position angulaire ou l'angle $\alpha_0$ du vecteur de tension par une intégration dans le temps de la fréquence de référence
   - et des moyens pour corriger l'angle $\alpha_0$ du vecteur de tension d'un terme de somme $\Delta\alpha$, ce terme de somme $\Delta\alpha$ pouvant être choisi comme fonction non linéaire de la fréquence de référence $f$,

   **caractérisé en ce que**
   ces moyens sont conçus de manière que le terme de somme $\Delta\alpha$ dépend de la fréquence de référence $f$ de manière qu'il augmente essentiellement lorsque la fréquence de référence $f$ augmente.

10. Dispositif de commande pour un convertisseur de fréquence selon la revendication 9,
    **caractérisé en ce que**
    l'unité de commande (5) est conçue de manière que le procédé de commande ou de régulation fonctionne selon au moins l'une des revendications 1 à 8.

Fig.1

Fig. 2

U/f-Kennlinie

13

Fig. 3

Fig. 4

U/f-Kennlinie

**IN DER BESCHREIBUNG AUFGEFÜHRTE DOKUMENTE**

**In der Beschreibung aufgeführte Patentdokumente**

- US 5814967 A

**In der Beschreibung aufgeführte Nicht-Patentliteratur**

- Sensorless Vector and Direct Torque Control. 1998, 401-407